# EUROPEAN PATENT SPECIFICATION

(11) **EP 2 886 277 B1**
(45) Date of publication and mention of the grant of the patent: **12.12.2018**
(21) Application number: 15150702.7
(22) Date of filing: 31.10.2012
(51) Int. Cl.: B28B 1/00, B28B 3/20, B28B 3/26, B28B 17/00

(54) **Method and apparatus for delivery of cementitious material**
Verfahren und Vorrichtung zur Abgabe von Zementmaterial
Procédé et appareil pour la distribution d'un matériau cimentaire

(30) Priority: 01.11.2011 GB 201118807
(43) Date of publication of application: 24.06.2015
(62) Divisional of application: 12795587.0
(73) Proprietor: Loughborough University, Loughborough, Leicestershire LE11 3TU (GB); Concrenetics, 9880 Aalter (BE)
(72) Inventor: Austin,, Simon, Quorn, Leicestershire LE11 8BS (GB); Buswell,, Richard Andrew, Loughborough, Leicestershire LE11 2EB (GB); Lim,, Sungwoo, Uxbridge, Middlesex UB8 3WS (GB); Webster,, John, Melton Mowbray, LE14 3BJ (GB)
(74) Representative: Potter Clarkson LLP

(56) References cited:
- EP-A2- 0 426 363
- WO-A2-2004/065707
- WO-A2-2007/050972
- US-A- 5 303 141
- US-A- 5 718 279
- US-A1- 2010 193 998
- US-B2- 7 680 555
- SUNGWOO LIM ET AL: "FABRICATING CONSTRUCTION COMPONENTS USING LAYERED MANUFACTURING TECHNOLOGY", GLOBAL INNOVATION IN CONSTRUCTION CONFERENCE, 16 September 2009 (2009-09-16), pages 512-520, XP055058731, Loughborough (United Kingdom)

## Description

The present invention relates to a novel construction technique, and apparatus for performing said technique, for deposition of cementitious material, optionally with the controlled application of "accelerators". The present invention also relates to an apparatus and technique for deposition of multiple layers of cementitious material, said cementitious material preferably being further dosed with one or more accelerator compounds at the point at which it is deposited, thereby allowing application of further layers onto the partly cured cementitious material without said material deforming unduly under the weight of the additional layer(s).

Rapid prototyping has grown in use enormously over the last decade in various fields of industrial design moving from being a niche technique into the mainstream with various techniques offering a choice of materials, resolution and assorted other factors. Amongst the more common techniques are stereolithography, selective laser sintering (SLS) and fused deposition modelling (FDM), with the latter two both being additive manufacturing techniques mostly used with plastics materials, with FDM in particular also being used for rapid manufacture of short run, or small batch size, plastics components.

Sungwoo Lim et a/: Fabricating Construction Components Using Layered Manufacturing Technology; Global Innovation in Construction Conference, January 2009, pp 512-520 describes a concrete printing process in which a cement-based material is used for a build while a gypsum-based material is used as a support. A retarder admixture is added to the material to secure the required open time for a constant workability. In the printing process, the fresh materials are extruded out of a nozzle with sufficient load capacity to carry the weight of layer layers seated above and to have a suitable plastic state to bond with surrounding beads and layers.

The present invention seeks to take the advantages offered by rapid prototyping techniques to the fields of product design and manufacture and introduce them to the field of construction, in effect providing a 3D printer capable of "printing" large complex, irregular objects and structures formed from cementitious materials.

Several attempts have been made to deliver some of the advantages offered by the present invention, however, all have their shortcomings and are generally extremely limited in terms of either or both of the size of object / structure which can be produced and also the complexity of said object / structure.

The term "accelerating agent" should be taken to include any material that is capable of accelerating, via catalytic or other processes, the curing / setting of cementitious material.

The term "retarder" should be taken to refer to any material which retards or slows the curing / setting of cementitious material. This may lengthen the open time for workability and / or improve the rheological properties for workability, extrudability, printability and buildability.

The term "cementitious material" or "cemented material" should be taken to include any agglomeration of filler(s) and binder(s) that can be conveyed in a fluid state and then harden after deposition.

The term "stabilised cementitious material" refers to a cementitious material which has a retarder added thereto.

The term "support material" refers to a material which is temporarily deposited to act as a support for subsequent layers of construction, said support material being removed and optionally recovered / recycled for subsequent reuse upon completion of said construction.

The terms "cartilage material" and "cartilage layer" refer to a material or layer imposed in between the support and cementitious layers, or over the finished surfaces, or around any internal or external feature that improves the ease of separation of these layers, separates the surface of the built component from another fluid e.g. to minimise evaporation of water or loss of other compound from the cementitious material during curing, to improve the surface finish of the cementitious material and / or to enable the creation of a textured finish to said cementitious material. This layer may be temporary, semi-permanent or may form a permanent feature of the completed component.

The term "work surface" refers not only to the virgin surface upon which construction is commenced, but also to the uppermost exposed layer of any or all of the cementitious material, the support material and the cartilage material.

The term "substantially simultaneously" specifically with reference to the description of the interrelation of the deposition of the cementitious and support materials should be construed broadly, in as much as it is unlikely to be the case that any given layer will require identical amounts and even distributions of both cementitious and support materials, therefore there will inevitably be instances where support material is being deposited whilst cementitious material is not and vice versa, hence this terminology The term "activation agent" should be taken to include any material that is capable of accelerating, via catalytic or other processes, the curing / setting of the support material. Where the term "nozzle" is used, it should be taken to indicate either a single nozzle or a plurality of nozzles located proximal one another, hence the singular should be construed as to also include the plural and vice versa.

A first aspect of the present invention provides a multi-layer construction method according to claim 1. More generally described in this disclosure is a multi-layer construction method with construction of each layer comprising the steps of:
providing a cementitious material;
delivering said cementitious material to a nozzle;
indexing said nozzle along a pre-determined path; and
applying said cementitious material to a work surface by extrusion through said nozzle; and
these steps being repeated for each additional layer of construction required.

Preferably the cementitious material is a stabilised cementitious material. Preferably the cementitious material is stabilised prior to delivery of the cementitious material to the nozzle and prior to applying the cementitious material to the work surface. Preferably said cementitious material is a concrete material.

Preferably said method features the additional step of applying an accelerating agent to said cementitious material, said application of said accelerating agent may be before, during or after said extrusion of said cementitious material. Said stabilised cementitious material may be agitated, through vibration, stirring, mixing or any other commonly known method, thereby reducing friction between said cementitious material and the internal surfaces of an apparatus being used to deliver it. Said indexing of said nozzle along said predetermined path is preferably computer controlled.

The method further comprises, substantially simultaneously with said application of said cementitious material, applying a support material in a contiguous layer with said cementitious material in areas where cementitious material is not desired, such that said support material, along with said cementitious material, provides the work surface for the next layer of construction.

Preferably said method further comprises exposing said support layer to an activation agent.

Said method may further comprise the application of a cartilage layer to the upper surface of the support layer in areas where the subsequent layer is to be one of cementitious material. The addition of said cartilage layer serves to improve the surface finish of the cementitious material whilst simultaneously improving the structural integrity of the finished construction through minimising the amount of moisture lost from the cementitious material whilst it is curing.

The method may further comprise the use of one or more cameras to capture real-time information relating to surface texture and / or deformation of the work surface, said information being used to determine application conditions necessary for the current layer being applied, said application conditions being selected from number of nozzles, nozzle size, nozzle orientation, flow rate of cementitious material, velocity of nozzle indexing and rate or timing of application of accelerating agent.

The application / delivery of any of the cementitious material, the support material, the cartilage layer or material, or the accelerator can be performed via a vibratable nozzle or by a variable diameter nozzle or both.

A second aspect of the present invention provides an apparatus as set out in claim 11. More generally described in the present disclosure is an apparatus for performing a multi-layer construction method as described above, said apparatus comprising a reservoir of a cementitious material, said reservoir being functionally connected to a nozzle, means for indexing said nozzle along a pre-determined path, means for controlling the flow of said cementitious material from said reservoir to said nozzle and extruding said material out of said nozzle.

Preferably, the reservoir of cementitious material comprises a reservoir of stabilised cementitious material. The reservoir may be of any size that allows for buffering of discontinuous, but pressure-controlled, flow from the nozzle. Preferably, said apparatus further comprises means for applying an accelerating agent to said cementitious material.

Said apparatus may further comprise agitation means in functional communication with said reservoir and / or said functional connection between said reservoir and said nozzle.

The apparatus preferably further comprises computer control means, said control means controlling the indexing of said nozzle, the flow rate of said cementitious material and the timing and rate of application of said accelerating agent.

Said indexing means preferably comprise a robotic arm, said robotic arm preferably being capable of both indexing along three independent axes and also capable of multi axis rotation of said nozzle.

The apparatus further comprises a reservoir of support material, said reservoir being functionally connected to a support material application nozzle, means for indexing said nozzle along a pre-determined path, means for controlling the flow of said support material from said reservoir to said nozzle and extruding said material out of said nozzle.

Said apparatus preferably also comprises means for applying an activation agent to said support material.

Said apparatus may further comprise a reservoir of cartilage material, said reservoir being functionally connected to a cartilage material application nozzle, means for indexing said nozzle along a pre-determined path, means for controlling the flow of said cartilage material from said reservoir to said nozzle and extruding said material out of said nozzle.

In a particularly preferred embodiment, said apparatus further comprises one or more cameras, said one or more cameras being either static, mounted to said robotic arm or independently indexable to track one or more nozzles, said cameras being capable of capturing information relating to texture, shape or form, said one or more cameras being capable of transferring said information to said computer control unit, said computer control unit being capable of interpreting said information and subsequently using said information to inform control of said one or more nozzles and the flow of said one or more materials from said one or more reservoirs to said one or more nozzles.

Any one or more of the nozzles for applying / delivering / extruding cementitious material, support material, cartilage material or accelerator may be a vibratable nozzle or a variable diameter nozzle or both.

Embodiments of the present invention will now be described by way of example and with reference to the accompanying drawings in which:
Figure 1 is a schematic diagram of a delivery apparatus for performing multi-layer delivery of a cementitious material;
Figure 2 is a schematic diagram of a print head incorporating two deposition heads, for use with the delivery apparatus of figure 1;
Figures 2a and 2b are schematic diagrams illustrating dispositions of the deposition heads of the print head of figure 2 during deposition;
Figure 3 is a schematic partial cross-sectional diagram of the cementitious material deposition head which forms part of the print head of figure 2 together with supporting delivery mechanism for delivery of cementitious material;
Figure 3a is a schematic side view of the print head;
Figure 4 is a schematic diagram of a delivery mechanism for accelerator and cartilage material, an optical measurement system and a robotic control mechanism suitable for use with the apparatus of figure 1;
Figure 5 is a schematic cross-sectional view of a sand and binder deposition head suitable for use with the apparatus of figure 1;
Figure 6 is a schematic diagram of a sand delivery mechanism suitable for use with the deposition head of figure 5;
Figure 7 is a schematic cross-sectional diagram of a cementitious material stirrer suitable for use with the apparatus of figure 1;
Figure 8 is a schematic diagram of a vibrating nozzle suitable for use with the print head of figure 2; and
Figure 9 is a schematic diagram of a variable nozzle suitable for use with the print head of figure 2.

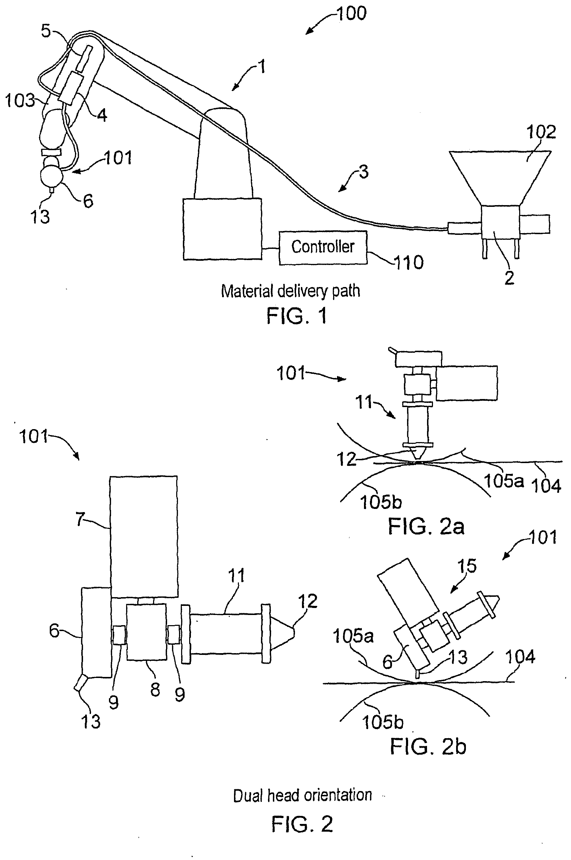

Figure 1 shows a delivery apparatus 100 for delivery of a cementitious material to a nozzle 13, the spatial position and orientation of which nozzle can be controlled robotically. The delivery apparatus 100 performs what may be described as a "printing" process using a delivery pump 2 to deliver the cementitious material to a nozzle 13. A worm pump 2 in combination with a hopper 102 is coupled to a deposition head 6 by way of a delivery pipe 3. The deposition head 6 is mounted on a robotic arm assembly 1 which is configured to provide automated freedom of movement to the deposition head 6. The robotic arm assembly 1 is controlled by a main controller 110. Preferably, the robotic arm assembly 1 enables the deposition head 6 to be moved, i.e. indexed along all three orthogonal axes together or independently and also allows the nozzle 13 to be rotated about all three orthogonal axes allowing a full six degrees of freedom. Thus, in a general aspect, the robotic arm assembly 1 provides a means for indexing the nozzle along a predetermined path.

The deposition head 6 forms part of a multi-function print head 101 which is mounted on a distal arm 103 of the robotic arm assembly 1. The distal arm 103 also supports a piston 5 and a reservoir 4 for delivery of the cementitious material to the nozzle 13. In use, the worm pump 2 delivers cementitious material from the hopper 102 to the reservoir 4 through the delivery pipe 3.

The cementitious material may be continuously agitated to maintain a suitable rheological state. The reservoir 4 may eliminate unwanted high pressure built up by the worm pump 2 during delivery of the material to the deposition head 6 in order to have a precise control of extrusion of the cementitious material. The cementitious material is preferably delivered from the reservoir 4 by the piston 5 to the deposition head 6, and to the nozzle 13 with adjustable flow-rate, and extruded along a pre-defined path controlled by the main controller 110 driving the robotic arm assembly 1. A retarder is preferably added to the cementitious material before it is loaded into the hopper 102, or when it is already in the hopper 102, so as to provide a reservoir of stabilised cementitious material. Alternatively, a retarder could be added downstream as discussed later.

Figure 2 shows in greater detail the print head 101 and the multi-axis rotation of the nozzle 13 and the print head 101. The print head 101 consists of a motor 7, a gearbox 8, a one way bearing 9, the deposition head 6 for cementitious material (also described herein as the "first" deposition head) and its nozzle 13, and a second deposition head 11 for support material and its nozzle 12. The print head 101 is rotatable about an axis orthogonal to the plane of the drawing of figure 2 as shown in figures 2a and 2b. The rotational freedom of the robotic arm assembly 1 allows the first and second deposition heads 6, 11 to be positioned for deposition of material relative to a surface 104 or 105a or 105b and to remain orientated normal to the surface 104, 105a, 105b being built within the confines of each axis. This allows for the creation of concave or convex curved surfaces 105a, 105b while minimising the risk of collision between the nozzles 12, 13 and the printed surface (e.g. particularly concave surface 105a), as well as allowing a fixed vertical orientation for building horizontal layers 104.

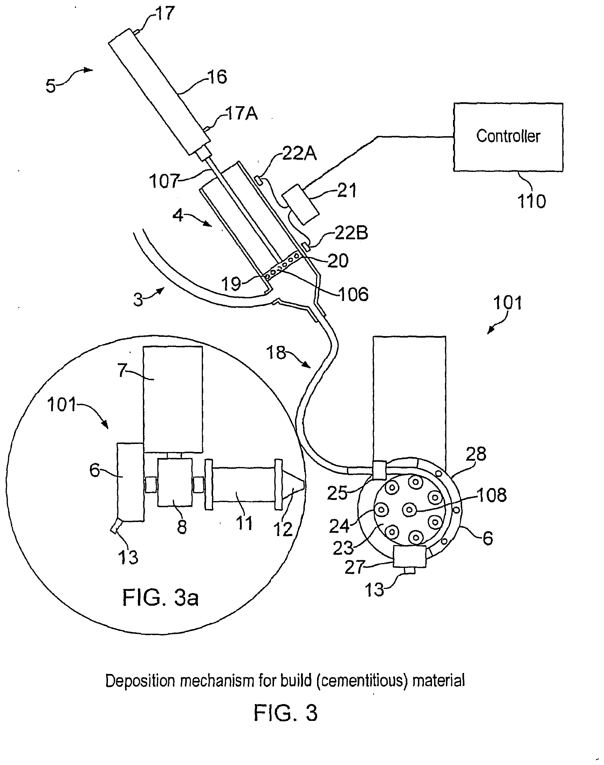

Figure 3 shows further details of the print head 101 and the cementitious material delivery mechanism. Piston 5 has a piston cylinder 16 driven by air from an air inlet 17. The piston cylinder 16 is configured to drive a piston head 106 within the reservoir 4 via piston rod 107. Piston head 106 includes a sealing ring 20 and one or more magnets 19 which are configured to actuate magnetic switches 22A, 22B by proximity thereto, to indicate first and second positions of the piston head 106. A switch logic circuit 21 is configured to monitor the state of the magnetic switches 22A, 22B and to provide feedback to the main controller 110.

The delivery pipe 3 is coupled to the end of the reservoir 4 for delivery of cementitious material. The cementitious material deposition head 6 on the print head 101 is coupled to the reservoir 4 by a transfer hose 18 which is clamped to the deposition head 6 by clamps 25, 27. A pump roller plate 23 carries a plurality of rollers 24 and is configured to rotate about an axis 108 such that each roller 24 can successively compress the transfer hose against a curved pressure shoe 28, similar to the design of a peristaltic pump.

In use, stabilised cementitious material is delivered by driving the piston cylinder 16 by injecting air through the air inlet 17, to drive piston head 106 towards switch 22B thereby expelling stabilised cementitious material from the reservoir 4, through the transfer hose 18, and to the deposition head 6. The cementitious material in the transfer hose 18 is extruded by the rollers 24 on the pump roller plate 23 rotating clockwise as viewed in figure 3, causing the cementitious material to be extruded through the nozzle 13. When the piston head magnets 19 trigger the lower switch 22B, the switch logic circuit 21 sends a signal to the main controller 110 to stop injecting air through the air inlet 17 and pump material through the delivery pipe 3. Cementitious material is thereby pumped into the reservoir 4 to refill the reservoir. This could be assisted by injecting air into a second air inlet 17A to drive piston cylinder 16 and piston head 106 upwards. The main controller 110 may also, during the refilling of reservoir 4, stop rotation of the pump roller plate 23 and movement of the robotic arm assembly to allow time for the refilling, before resuming operation after the reservoir refilling is complete. A retarder could be added to the cementitious material when charging the reservoir 4.

The piston arrangement preferably provides a constant pressure to the deposition head 6 and / or nozzle 13. This function could alternatively be performed by any suitable mechanism for controlling pressure and flow of material from a reservoir or supply to the deposition head and / or nozzle. For example, a bladder- or diaphragm-based system could be used.

The main controller 110 generally controls the flow rate of the cementitious material through the nozzle 13 in concert with the motion or indexing of the nozzle.

Figure 3 also shows in the inset diagram figure 3a, a front view of the print head 101 which is depicted in end cross-section in the main part of the figure.

The cementitious material to be used in the delivery mechanism just described may be of any suitable type as discussed earlier, but should preferably be developed according to criteria such as: workability, pumpability, extrudability, printability and buildability, optimised for a three-dimensional concrete printing process.

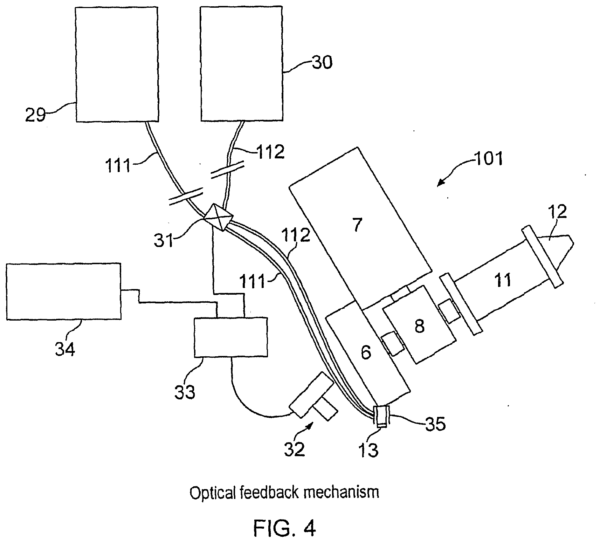

Figure 4 depicts a real-time feedback system using an optical measuring device 32, and also shows further features of the print head 101 for delivery of accelerator and / or cartilage material.

The feedback system comprises an optical sensor 32, a measurement processor 33 and an interface 34 with the main controller 110 of the robotic arm assembly 1. The optical sensor may comprise one or more cameras for viewing the layers of material being built up by extrusion from either one of the deposition heads 6 and 11. The optical sensor 32 (or plural sensors) may be static or mounted to a part of the robotic arm assembly 1 or may be mounted to the print head 101. Alternatively, the optical sensor or sensors 32 could be mounted to a separately moveable or indexable structure, e.g. on a separate track or a robotic arm. The optical sensor 32, e.g. camera, is preferably configured to capture information relating to texture, shape or form of the material deposited by either or both of the deposition heads 6, 11.

In use, the feedback system may measure some or all of the continuity, width, height and reflectance of the extruded bead (e.g. of cementitious material or other material to be described later) during deposition as well as any vertical, horizontal or other deformation of previously built layers. The feedback system may also monitor information relating to the surface finish and texture and three-dimensional location of the extruded bead and / or previously built layers with reference to the instructions generated from the computer model. Such information is processed in real-time in the measurement processor 33, and any variations to the set parameters may instigate changes to the deposition process, pump speed, velocity of travel by controlling the robot interface 34 and system pause, etc. Variations to the set parameters may be made "on the fly" as the material is deposited such that there is real-time feedback to the delivery apparatus to control current parameters being used to deposit the current layer being deposited. Alternatively, variations to the set parameters may be made to control future parameters, e.g. for the next deposited layer so as to "correct" or "repair" deviations from the intended profile of a previous layer or layers. Variations to the set parameters may include any of the operational parameters of the deposition apparatus such as to the pumps or nozzles or robotic arm assembly to control flow rates, height or position of the material being deposited.

The print head 101 or delivery mechanism may further include a container 29 for an accelerator ("accelerating agent") and a container 30 for cartilage material. Each of these containers 29, 30 is coupled to a nozzle 35 by way of delivery pipes 111, 112 and a solenoid valve 31 which is under the control of the measurement processor 33. The nozzle 35 may be integrated with the cementitious material nozzle 13 in the form of a multi-chamber nozzle. Alternatively, the nozzle 35 could be adjacent to, or concentric with, the cementitious material nozzle 13, e.g. forming a shroud.

The accelerating agent and / or cartilage material may therefore be delivered through a nozzle 35 that is one or more of coaxial with, adjacent to, or at least partially surrounding the cementitious material nozzle 13. The accelerating agent nozzle and / or cartilage material nozzle 35 may comprise a circumferential shroud around the cementitious material nozzle 13 or may be incorporated within the cementitious material nozzle 13. This enables the cartilage material to be conveniently built up in layers simultaneously with, or interspersed with, the cementitious material, or as a base layer, intermediate layer or cap layer to the or each cementitious layer. Exemplary cartilage materials can include latex, gelatin, vinyl, metals (e.g. for electrical conductivity, finish or structural enhancement), expanding foam (e.g. for thermal insulation), resins, powders, textiles, dyes, inks and other surface finishes, or property-enhancing materials.

In use, the solenoid valve 31 controls the delivery of accelerator and cartilage material from the containers 29, 30 to be deposited through the nozzle 35. The systems of figure 4 for delivery of accelerator and cartilage material are shown as gravity fed systems. However, it is possible also to replace either of these with a pumped system. For example, a peristaltic pump could meter delivery of either or both accelerator or cartilage material to the nozzle 13.

Thus, in a general aspect, the container 29, valve 31, delivery pipe 111 and nozzle 35 or 13 provides an exemplary means for applying an accelerating agent to the stabilised cementitious material, and the main controller 110, interface 34 exemplify apparatus to control the flow rate of the timing and rate of application of an accelerating agent.

An accelerator for the build (cementitious) material may comprise sulphuric, aluminium salt and diethanolamine, and can be selected to control the setting time of the cementitious material. The accelerator may be mixed with a retarder, e.g. formed by amino-tris (methylenephosphonic acid), citric and formaldehyde, to secure a sufficient open time to ensure layer buildability. Preferably some retarder is premixed with the cementitious material provided in the hopper 102 and delivered to the deposition head 6. This provides a greater open time for use of the cementitious build material. Preferably, accelerator is added later than the retarder, e.g. at the nozzle 13 to shorten the stiffening time after deposition of the material.

Accelerator and cartilage materials in the containers 29, 30 of Figure 4 may be held under low pressure in the containers 29 and 30. When solenoid valve 31 is energized in such a manner as to allow passage of material from either container 29 or 30 into the nozzle 35, deposition onto the previously laid surface is coated with material from the selected container 29, 30. As mentioned earlier, the nozzle 35 may comprise a shroud which may consist of separated segments within, and may be rotatable to orientate in the direction of travel of the deposition head 6 along a work piece being constructed. Thus, in a general aspect, the print head 101 in combination with the containers 29, 30, solenoid valve 31, delivery pipes 111, 112 and nozzle 13, 35 provide a reservoir for accelerating agent, a reservoir for cartilage material and means for delivering the accelerating agent and cartilage material to a nozzle for extrusion therefrom.

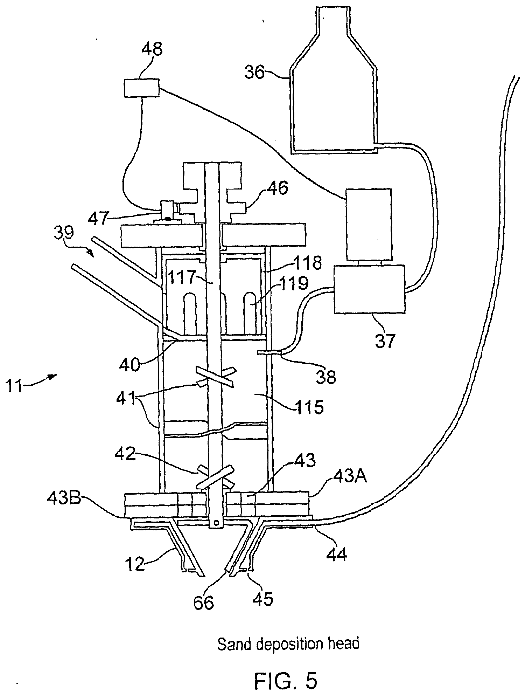

Figure 5 shows further detail of the deposition head 11 for support material. The support material is a sand-based material. Exemplary support material could be binder and sand. The binder is stored in a binder container 36 coupled to a mixing chamber 115 by a binder pump 37 and a binder entry point 38 of the mixing chamber 115. The support material (e.g. casting sand) is deliverable through a sand entry point 39 from a suitable container, not shown. The mixing chamber 115 includes mixing paddles 41, 42 for mixing the sand and binder. The paddles 41, 42 are rotated by a suitable motor 46 and shaft 117, which also rotates an anti-lodging rod 66 within the nozzle 12. Plates 43A, 43B have apertures 43.

In use, the mixed sand and binder is passed through the apertures 43 in the plates 43A, 43B which are size adjustable to regulate the rate at which the mixed material falls through, to control the mixing time in the mixing chamber 115 in order to maintain the degree of mixing. The mixed material is then extruded through the nozzle 12. The amount of support material in the mixing chamber 115 is controlled by a metering unit 40 comprising a rotating cylinder 118 with slits 119, and flow-rate of the support material is measured and controlled by a variable reluctance pickup 47 and a pump speed control circuit 48. As the shaft 117, mixing paddles 41, 42 and anti-lodging rod 66 rotate, the variable reluctance pickup creates a variable frequency signal according to the speed of rotation. The measurement made by the variable reluctance pickup could alternatively be generated by other devices, such as Hall-effect or optical devices, for example. This variable frequency signal is fed to a frequency-to-voltage converter and then to a pulse width modulation (PWM) circuit to drive the binder pump 37. The binder pump is preferably driven so as to maintain a desired or constant sand binder ratio. The rotation of anti-lodging rod 66 prevents residues building up inside the nozzle 12.

In a general aspect, the mixing chamber 115 provides an exemplary reservoir for support material for delivery to the nozzle 12 and the main controller 110 further controls the rate of flow of the support material to the nozzle by way of the motor 46 and binder pump 37.

An accelerator or "activation agent" for the support material may be delivered by way of an accelerator delivery pipe 44 to the nozzle 12. As shown, the nozzle 12 may be a multi-port nozzle and may include a shroud nozzle arrangement 45 to deliver the activation agent for the support material. The activation agent may therefore be delivered through a nozzle 45 that is one or more of coaxial with, adjacent to, or at least partially surrounding the support material nozzle 12. In one arrangement as shown, the activation agent nozzle 45 may comprise a circumferential slot around the support material nozzle 12. Another arrangement might be that the activation agent is mixed into the support material within the support material nozzle 12.

Such arrangements as described above are ideally suited for dispensing casting sand or another suitable sand-based material that is set with a gaseous material, such as CO₂. Moist sand, e.g. generated by the deposition head 11 mixing sand from entry point 39 with a wet binder material (e.g. water) from binder container 36), is set with the CO₂. This enables the support material to be conveniently built up in layers in a similar manner to that of the cementitious material. As discussed earlier, support materials may be used which can be removed and possibly recycled after deposition, e.g. after construction of an article, or after deposition of subsequent layers of cementitious material. For example, a sand-based support material can be flushed with water during a later stage of the process.

An exemplary activation agent for the support material may be carbon dioxide (CO₂), applied under low pressure to the mixed support material which accelerates the reaction between silica sand and sodium silicate, by causing desiccation. The accelerator may be delivered from an external cylinder (not shown), equipped with 6 mm pipe 44, and passed through a solenoid valve (not shown) to the exit nozzle 12 via the shroud 45. Thus, the support material can be activated during deposition.

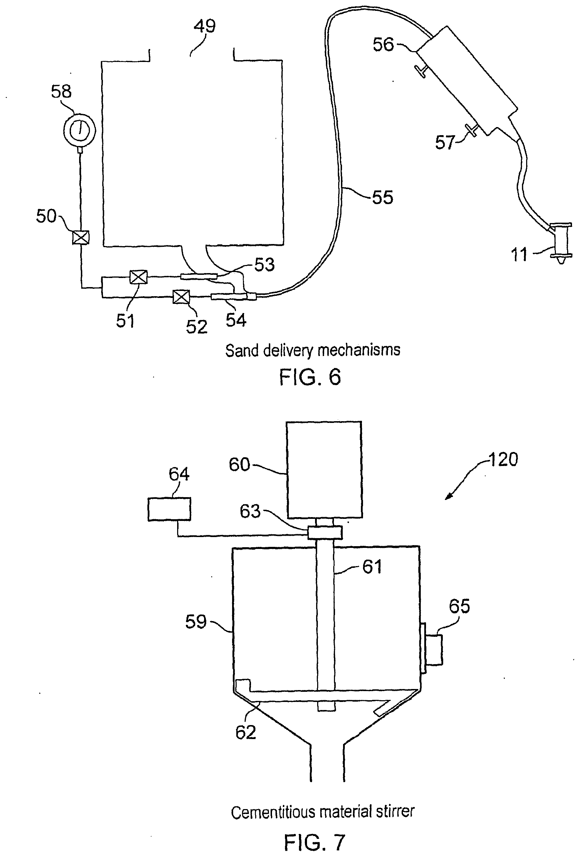

Figure 6 shows further details of a mechanism for delivery of the sand component of the support material. The support material, e.g. dry silica sand, is blown through a delivery tube 55 from a bulk container 49 using low pressure compressed air, which is added through the air gauge 58 and needle valve 50, into a small reservoir 56 mounted near to the extreme end of the robotic arm assembly 1. Exhaust air from the reservoir 56 is regulated by the needle valve 52 and air tube 54 to reduce the velocity of dry sand to the deposition head 11 for the support material. During the periods of inactivity of support material deposition, a weight sensor 57 fitted to the reservoir 56 stops the flow of sand, using the needle valve 51 and air tube 53, when the reservoir 56 is full. Any one or more of the bulk container 49, the binder container 36 and the mixing chamber 115 may also exemplify a reservoir of support material.

As stated earlier, the cementitious material may be agitated to maintain freshness. Figure 7 depicts the details of a stirrer arrangement 120 that allows continuous or periodic agitation of the cementitious material. The stirrer arrangement 120 may be disposed at any suitable location in the cementitious material delivery path, e.g. at the hopper 102 and worm pump 2 assembly shown in figure 1 or downstream thereof. The cementitious material is delivered to container 59 which includes a mixing or stirring paddle 62 and a vibrator 65. The mixing or stirring paddle 62 is rotatable by motor 60 by way of a shaft 61. Agitation of the material in the container 59 is performed by the motor 60 driving the shaft 61 and mixing paddle 62, and by the vibrator 65 shaking the container 59. The paddle 62 has a specific surface area, thus it requires a certain force to move it. The force, which indicates the stiffness of the material, can be measured by a torque measuring unit 63. A force measurement processor 64 monitors the torque required to rotate the paddle 62 and adjusts process parameters and frequency and amplitude of the vibrator 65 to assist the flow of cementitious material.

Thus, in a general aspect, the stirring paddle 62 and / or the vibrator 65 exemplify agitation means suitable for agitating cementitious material or stabilised cementitious material.

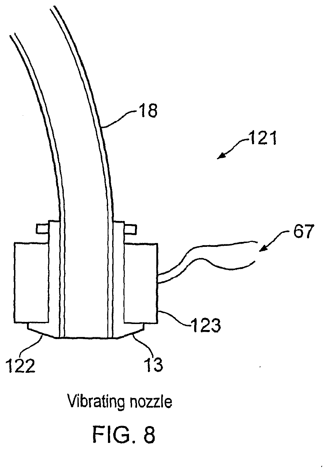

Figure 8 shows a vibrating nozzle arrangement 121 configured to compact material as it is being deposited and improve inter-layer bonding for wet materials as well as improving surface finish. The vibrating nozzle arrangement 121 can be deployed either for depositing build (cementitious) material or support material, i.e. it can be incorporated into the nozzle 13 or the nozzle 12 of figures 2 and 3a.

The exemplification of figure 8 shows the vibrating nozzle arrangement 121 serving as a cementitious material nozzle. Cementitious material may be delivered through the hose 18 or other conduit, e.g. via the roller pump 24. The hose 18 is retained in a nozzle head 122 and is vibrated vertically (as orientated in the diagram) by the vibrator 123, i.e. the vibration occurs in the direction parallel to the hose long axis and in the direction of extrusion. The vibrator 123 may be a piezo-electric stack connected to a power supply through wires 67. A voice coil or mechanical movement could also or alternatively be employed for larger amplitudes while the vibrator 123 remains fixed. The application of ultrasonic vibration to the deposition head nozzle could also or alternatively be used for smaller amplitudes for precise material control.

Thus, in a general aspect, figure 8 provides a vibratable nozzle. The vibratable nozzle could be configured to vibrate the nozzle in a direction parallel to the nozzle axis. The nozzle axis, in this context, corresponds to the longitudinal axis of the hose and the direction of extrusion. A vibrating nozzle may improve the flow of material being extruded through the nozzle and or compact the extruded materials. The vibratable nozzle could be configured to vibrate the nozzle in a direction orthogonal to the nozzle axis. This may result in a different quality of surface without surface compaction.

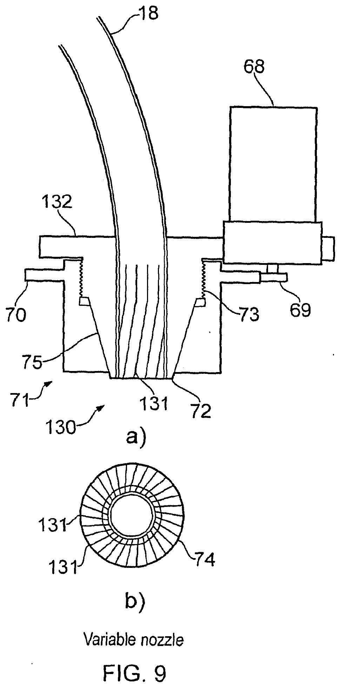

Figures 9a and 9b show a variable diameter nozzle 130 configured to provide variable bead dimensions and variable bead aspect ratio. This allows higher density of fill for certain geometries and provides fast dynamic system response.

The variable diameter nozzle 130 can be deployed either for depositing build (cementitious) material or support material, i.e. it can be incorporated into the nozzle 13 or the nozzle 12 of figures 2 and 3a.

The exemplification of figures 9a and 9b shows the variable diameter nozzle 130 serving as a cementitious material nozzle 13. Cementitious material may be delivered through the hose 18 or other conduit, e.g. via the roller pump 24. The hose 18 is coupled into a hose housing 132 in nozzle 130 and the hose has multiple axial slots 131 cut to maximise closing movement. As shown in figures 9a and 9b, the axial slots 131 are preferably also slightly oblique to the long axis of the hose and preferably also somewhat oblique to the radial direction of the hose.

A motor and gearbox 68 are coupled to rotate a pinion gear 69, which engages and turns a ring gear 70 that is attached to a closing block 71. A thread 73 couples the ring gear 70 and closing block 71. Complementary tapered profiles 75 on each of the ring closing block 71 and hose housing 132 causes compression of the distal end 72 of the hose housing 132 when the closing block and nozzle 13 are axially displaced relative to one another using the thread 73. This causes the end of the hose housing 132 and hose 18 to reduce or increase in radius, thereby defining a variable diameter nozzle 130.

Other arrangements of variable diameter nozzle may be envisaged which allow changing of shape / cross-sectional profile of the nozzle. Thus, the expression "variable diameter" nozzle is intended to encompass a nozzle in which at least one cross-sectional dimension of a nozzle end can be varied. The cross-sectional profile need not be circular or elliptical, but could be rectangular, or other multi-sided shape. The hose need not have slots in it but could rely on pliancy, plasticity or elasticity of the hose material to contract or expand.

A variable diameter nozzle whose orifice can be automatically adjusted in shape and / or size to change the cross-sectional profile of extruded material in a controlled and continuous manner can be particularly useful when a layer of material to be deposited requires the formation of one or more beads which are required to be smaller or narrower than the standard bead size for a printed layer of material. This may avoid the need to leave partial gaps or change nozzles when different resolutions of printed bead are required.

The main controller 110 may be used to control any function of the delivery apparatus 100 based on information / feedback received from the optical sensor 32, such as flow rate of material to the nozzles 12, 13, 35, 45 and extrusion rate therefrom. The optical sensor or sensors could be replaced by or supplemented with other types of sensor suitable for monitoring the texture, shape or form of the layers being printed by the apparatus 100. For example, sensors using other parts of the electromagnetic spectrum or ultrasound could be used.

Although the means for indexing the nozzles along a predetermined path has been generally exemplified by a robotic arm having pivoting sections, it is possible for this function to be performed by any suitable robotic arm assembly or structure capable of manipulating the nozzles 12, 13, 35, 45 to the required position in space and the required angular presentation. For example, a gantry system could be used which presents an x-y-z stage for the print head 101. The gantry system may comprise four columns with two supporting beams that track vertically. The two supporting beams in turn support a third beam that tracks along one horizontal axis that supports the print head. The print head can then track in the other horizontal direction along the third beam. Other arrangements are, of course, possible.

The main controller 110 is preferably a computer control means although application specific circuits could be deployed instead or in addition. The main controller can be a single central unit or could be distributed among the various component parts of the apparatus 100.

Although the cementitious deposition head nozzle 13 and the support material deposition head nozzle 12 of the preferred embodiments have been shown as having different angular presentations on the print head 101 (figure 2) so that they can each be rotated into position (figures 2a and 2b) for deposition on a surface 104, it will be understood that the cementitious material nozzle 13 and the support material nozzle 12 could alternatively be provided in the same orientation, and could be immediately adjacent one another, so as to provide for simultaneous deposition or more rapid switching between deposition of cementitious material and support material, for example.

Advantages of enabling the delivery of both cementitious material and support material in a "printing" type process is that a reduced, or minimum, volume and mass of cementitious material can be delivered to the point of use, reducing the cost and time for building and post-processing, clear-up and recycling time. The delivery paths for both cementitious material and the support material can be separately optimised for delivery to and from the same print head. This enables formation of structures that include hollow panels and components and doubly curved structures. The deposition process can be combined with other surface preparation or surface treatment techniques, e.g. for forming smooth surfaces, such as tamping, or by a vibration / oscillatory instrument, air jets or combinations thereof.

Other embodiments are intentionally within the scope of the accompanying claims.

## Claims

1. A multi-layer construction method wherein the construction of each layer comprises the steps of:
providing a cementitious material;
delivering said cementitious material to a nozzle (13) indexing said nozzle along a pre-determined path; and
applying said cementitious material to a work surface by extrusion through said nozzle;
these steps being repeated for each additional layer of construction required the method further comprising:
substantially simultaneously with said application of said cementitious material, applying a support material in a contiguous layer with said cementitious material in areas where cementitious material is not desired, such that said support material, along with said cementitious material, provides the work surface for the next layer of construction, **characterized by** the support material being a sand-based material.

2. The construction method of claim 1 wherein the support material comprises silica sand and sodium silicate.

3. A construction method according to claim 1 in which the cementitious material is a stabilised cementitious material or a concrete material.

4. A construction method according to any of claims 1, 2 or 3, further comprising the step of applying an accelerating agent to said cementitious material.

5. The method described in claim 1 further comprising exposing said support material to an activation agent.

6. The method of claim 5 wherein the activation agent is a gaseous material.

7. The method of claim 5 wherein the activation agent is carbon dioxide.

8. A method according to either of claims 1 or 5 further comprising the application of a cartilage layer to the upper surface of the support layer in areas where the subsequent layer is to be one of cementitious material, or vice versa.

9. A method according to any preceding claim further comprising the use of one or more cameras (32) to capture real-time information relating to surface texture and/or deformation of the work surface, said information being used to determine application conditions necessary for the current layer being applied.

10. The method of claim 9 wherein said application conditions are one or more of nozzle size, nozzle orientation, flow rate of cementitious material, velocity of nozzle indexing and rate or timing of application of accelerating agent.

11. Apparatus (100) for performing a multi-layer construction method according to any preceding claim comprising a reservoir (4) of a cementitious material, said reservoir being functionally connected to a cementitious material nozzle (13), means (1) for indexing said cementitious material nozzle along a pre-determined path, means (5) for controlling the flow of said cementitious material from said reservoir to said cementitious material nozzle (13) and extruding said material out of said nozzle, the apparatus further comprising:
a reservoir (49, 56, 36, 115) of support material, said reservoir being functionally connected to a support material application nozzle (12), means (1) for indexing said support material application nozzle along a predetermined path, means (37, 46, 110, 115) for controlling the flow of said support material from said reservoir (49, 36, 115) to said support material application nozzle (12) and extruding said material out of said support material application nozzle, **characterized in that** the reservoir of support material comprises sand-based material.

12. The apparatus of claim 11 wherein the reservoir of support material comprises silica sand and sodium silicate.

13. The apparatus of claim 11 further including a binder container (36) of binder material coupled to a mixing chamber (115), the mixing chamber also coupled to the reservoir (49) of support material and including mixing paddles (41, 42) for mixing the sand and binder prior to extrusion through the support material application nozzle (12).

14. Apparatus according to claim 11, further comprising means (13,29,31,35,111) for applying an accelerating agent to said cementitious material.

15. Apparatus according to claim 11 further comprising agitation means (62,65), said agitation means being in functional communication with said reservoir and / or said functional connection between said reservoir and said nozzle.

16. Apparatus according to claim 11 further comprising means (44,45) for applying an activation agent to said support material.

17. The apparatus of claim 16 in which the means for applying an activation agent to the support material comprises a source of gaseous activation material and means (44) for delivering said gaseous activation material to the support material application nozzle (12).

18. The apparatus of claim 17 in which the source of gaseous activation material comprises a source of carbon dioxide.

19. The apparatus of claim 17 in which the support material application nozzle (12) comprises a shroud (45) for applying the gaseous activation material to support material extruded through the support material application nozzle.

20. Apparatus according to any of claims 11 to 19 further comprising a reservoir (30) of cartilage material, said reservoir being functionally connected to a cartilage material application nozzle (35), means for indexing said nozzle along a pre-determined path, means for controlling the flow of said cartilage material from said reservoir to said nozzle and extruding said material out of said nozzle.

21. Apparatus according to any preceding claim further comprising one or more cameras (32), said one or more cameras being either static, mounted to a robotic arm or independently indexable to track said one or more nozzles, said cameras being capable of capturing information relating to texture, shape or form, said one or more cameras being capable of transferring said information to a computer control unit (110), said computer control unit being capable of interpreting said information and subsequently using said information to inform control of said one or more nozzles and the flow of said one or more materials from said one or more reservoirs to said one or more nozzles.

22. Apparatus according to any one of claims 11 to 21 in which any one or more of the nozzles comprises a vibratable nozzle (121).

23. Apparatus according to any one of claims 11 to 21 in which any one of the nozzles comprises a variable diameter nozzle (130).

## Patentansprüche

1. Mehrschicht-Aufbauverfahren, in dem ein Aufbauen jeder Schicht die folgenden Schritte umfasst:
Bereitstellen eines zementartigen Materials;
Liefern des zementartigen Materials an eine Düse (13);
Anordnen der Düse entlang eines vorgegebenen Pfads; und
Aufbringen des zementartigen Materials auf eine Arbeitsoberfläche durch Extrudieren durch die Düse;
wobei diese Schritte für jede erforderliche zusätzliche Aufbauschicht wiederholt werden, wobei das Verfahren ferner Folgendes umfasst:
Aufbringen eines Stützmaterials in einer an das zementartige Material angrenzenden Schicht, im Wesentlichen gleichzeitig mit dem Aufbringen des zementartigen Materials, in Bereichen, wo zementartiges Material nicht erwünscht ist, sodass das Stützmaterial gemeinsam mit dem zementartigen Material die Arbeitsoberfläche für die nächste Aufbauschicht bereitstellt, **gekennzeichnet dadurch, dass** das Stützmaterial ein Material auf Sandbasis ist.

2. Aufbauverfahren nach Anspruch 1, wobei das Stützmaterial Quarzsand und Natriumsilikat umfasst.

3. Aufbauverfahren nach Anspruch 1, wobei das zementartige Material ein stabilisiertes zementartiges Material oder ein Betonmaterial ist.

4. Aufbauverfahren nach einem der Ansprüche 1, 2 oder 3, ferner umfassend den Schritt des Aufbringens eines Beschleunigungsmittels auf das zementartige Material.

5. Verfahren nach Anspruch 1, ferner umfassend das Aussetzen des Stützmaterials einem Aktivierungsmittel.

6. Verfahren nach Anspruch 5, wobei das Aktivierungsmittel ein gasförmiges Material ist.

7. Verfahren nach Anspruch 5, wobei das Aktivierungsmittel Kohlendioxid ist.

8. Verfahren nach einem der Ansprüche 1 oder 5, ferner umfassend das Aufbringen einer Knorpelschicht auf die obere Oberfläche der Stützschicht in Bereichen, wo die darauffolgende Schicht eine aus zementartigem Material sein soll, oder umgekehrt.

9. Verfahren nach einem der vorhergehenden Ansprüche, ferner umfassend den Gebrauch einer oder mehrerer Kameras (32), um Echtzeitinformationen bezüglich Oberflächenbeschaffenheit und/oder Verformung der Arbeitsoberfläche zu erfassen, wobei die Informationen verwendet werden, um Anwendungsbedingungen, die für die gegenwärtig aufgebrachte Schicht erforderlich sind, zu bestimmen.

10. Verfahren nach Anspruch 9, wobei es sich bei den Anwendungsbedingungen um eine oder mehrere von Düsengröße, Düsenausrichtung, Durchflussrate des zementartigen Materials, Geschwindigkeit der Düsenanordnung und Aufbringungsrate oder -zeit eines Beschleunigungsmittels handelt.

11. Vorrichtung (100) zum Durchführen eines Mehrschicht-Aufbauverfahrens nach einem der vorhergehenden Ansprüche, umfassend einen Behälter (4) für zementartiges Material, wobei der Behälter funktionsfähig mit einer Düse für zementartiges Material (13), einem Mittel (1) zum Anordnen der Düse für zementartiges Material entlang eines vorgegebenen Pfads, einem Mittel (5) zum Regeln des Flusses des zementartigen Materials von dem Behälter zur Düse für zementartiges Material (13) und zum Extrudieren des Materials aus der Düse verbunden ist, wobei die Vorrichtung ferner Folgendes umfasst:
einen Behälter (49, 56, 36, 115) für Stützmaterial, wobei der Behälter funktionsfähig mit einer Auftragungsdüse für Stützmaterial (12), einem Mittel (1) zum Anordnen der Auftragungsdüse für Stützmaterial entlang eines vorgegebenen Pfads, einem Mittel (37, 46, 110, 115) zum Regeln des Flusses des Stützmaterials von dem Behälter (49, 36, 115) zur Auftragungsdüse für Stützmaterial (12) und zum Extrudieren des Materials aus der Auftragungsdüse für Stützmaterial verbunden ist, **gekennzeichnet dadurch, dass** der Behälter für Stützmaterial Material auf Sandbasis umfasst.

12. Vorrichtung nach Anspruch 11, wobei der Behälter für Stützmaterial Quarzsand und Natriumsilikat umfasst.

13. Vorrichtung nach Anspruch 11, ferner umfassend einen Bindemittelbehälter (36) für Bindemittel, der an eine Mischkammer (115) gekoppelt ist, wobei die Mischkammer auch an den Behälter (49) für Stützmaterial gekoppelt ist und Mischpaddel (41, 42) für das Mischen von Sand und Bindemittel vor dem Extrudieren durch die Auftragungsdüse für Stützmaterial (12) einschließt.

14. Vorrichtung nach Anspruch 11, ferner umfassend Mittel (13, 29, 31, 35, 111) zum Aufbringen eines Beschleunigungsmittels auf das zementartige Material.

15. Vorrichtung nach Anspruch 11, ferner umfassend ein Rührmittel (62, 65), wobei das Rührmittel in funktionsfähiger Verbindung mit dem Behälter und/oder in funktionsfähiger Verbindung zwischen dem Behälter und der Düse steht.

16. Vorrichtung nach Anspruch 11, ferner umfassend ein Mittel (44,45) zum Aufbringen eines Aktivierungsmittels auf das Stützmaterial.

17. Vorrichtung nach Anspruch 16, wobei das Mittel zum Aufbringen eines Aktivierungsmittels auf das Stützmaterial eine Quelle eines gasförmigen Aktivierungsmaterials und ein Mittel (44) zum Liefern des gasförmigen Aktivierungsmaterials an die Auftragungsdüse für Stützmaterial (12) umfasst.

18. Vorrichtung nach Anspruch 17, wobei die Quelle des gasförmigen Aktivierungsmaterials eine Quelle für Kohlendioxid umfasst.

19. Vorrichtung nach Anspruch 17, wobei die Auftragungsdüse für Stützmaterial (12) einen Kragen (45) zum Aufbringen des gasförmigen Aktivierungsmaterials auf das Stützmaterial, das durch die Auftragungsdüse für Stützmaterial extrudiert wird, umfasst.

20. Vorrichtung nach einem der Ansprüche 11 bis 19, ferner umfassend einen Behälter (30) für Knorpelmaterial, wobei der Behälter funktionsfähig mit einer Auftragungsdüse für Knorpelmaterial (35),
einem Mittel zum Anordnen der Düse entlang eines vorgegebenen Pfads, einem Mittel zum Regeln des Flusses des Knorpelmaterials von dem Behälter zur Düse und zum Extrudieren des Materials aus der Düse verbunden ist.

21. Vorrichtung nach einem der vorhergehenden Ansprüche, ferner umfassend eine oder mehrere Kameras (32), wobei die eine oder die mehreren Kameras entweder feststehend, auf einem Roboterarm befestigt oder unabhängig angeordnet sind, um eine oder mehrere Düsen zu verfolgen, wobei die Kameras in der Lage sind, Informationen bezüglich Beschaffenheit, Gestalt oder Form zu erfassen, wobei die eine oder die mehreren Kameras in der Lage sind, die Informationen an eine Computersteuerungseinheit (110) zu übertragen, wobei die Computersteuerungseinheit in der Lage ist, die Informationen zu interpretieren und darauffolgend die Informationen zu verwenden, um eine oder mehrere der Düsen sowie den Durchfluss eines oder mehrerer Materialien von einem oder mehreren der Behälter zu einer oder mehreren der Düsen zu regeln.

22. Vorrichtung nach einem der Ansprüche 11 bis 21, wobei eine oder mehrere der Düsen eine rüttelbare Düse (121) umfassen.

23. Vorrichtung nach einem der Ansprüche 11 bis 21, wobei eine der Düsen eine Düse mit variablem Durchmesser (130) umfasst.

## Revendications

1. Procédé de construction multicouche dans lequel la construction de chaque couche comprend les étapes suivantes :
utilisation d'un matériau cimentaire ;
acheminement dudit matériau cimentaire jusqu'à une tuyère (13) indexation de ladite tuyère le long d'une voie prédéfinie ; et
application dudit matériau cimentaire à une surface de travail par extrusion à travers ladite tuyère ;
ces étapes se répétant pour chaque couche supplémentaire de construction requise le procédé comprenant en outre :
sensiblement simultanément avec ladite application dudit matériau cimentaire, l'application d'un matériau de soutien dans une couche contiguë avec ledit matériau cimentaire dans des zones où le matériau cimentaire n'est pas souhaité, de sorte que ledit matériau de soutien, ainsi que ledit matériau cimentaire, procurent la surface de travail pour la couche suivante de construction, **caractérisé par le fait que** le matériau de soutien est un matériau sableux.

2. Procédé de construction selon la revendication 1, dans lequel le matériau de soutien contient du sable siliceux et du silicate de sodium.

3. Procédé de construction selon la revendication 1, dans lequel le matériau cimentaire est un matériau cimentaire stabilisé ou un matériau de type béton.

4. Procédé de construction selon l'une quelconque des revendications 1, 2 ou 3, comprenant en outre l'étape d'application d'un agent d'accélération dans ledit matériau cimentaire.

5. Procédé de construction selon la revendication 1, comprenant en outre l'exposition dudit matériau de soutien à un agent d'activation.

6. Procédé de construction selon la revendication 5, dans lequel l'agent d'activation est une substance gazeuse.

7. Procédé de construction selon la revendication 5, dans lequel l'agent d'activation est du dioxyde de carbone.

8. Procédé de construction selon l'une des revendications 1 ou 5, comprenant en outre l'application d'une couche de cartilage à la surface supérieure de la couche de soutien dans des zones où la couche suivante doit être cimentaire, ou vice versa.

9. Procédé de construction selon l'une quelconque des revendications précédentes, comprenant en outre l'emploi d'au moins une caméra (32) pour capturer des informations en temps réel liées à la texture de surface et/ou la déformation de la surface de travail, lesdites informations servant à déterminer l'application des conditions nécessaire pour l'application de couche en cours.

10. Procédé de construction selon la revendication 9, dans lequel lesdites conditions d'application sont au moins la taille de tuyère, l'orientation de tuyère, le débit du matériau cimentaire, la vitesse d'indexation de tuyère et le taux ou le minutage de l'application d'agent d'accélération.

11. Appareil (100) permettant d'effectuer un procédé de construction multicouche conforme à l'une quelconque des revendications précédentes, comprenant un réservoir (4) de matériau cimentaire, ledit réservoir étant relié fonctionnellement à une tuyère (13) de matériau cimentaire, un moyen (1) permettant d'indexer ladite tuyère de matériau cimentaire le long d'une voie prédéfinie, un moyen (5) permettant de réguler l'écoulement dudit matériau cimentaire dudit réservoir à ladite tuyère (13) de matériau cimentaire et l'extrusion dudit matériau hors de ladite tuyère, l'appareil comprenant en outre :
un réservoir (49, 56, 36, 115) de matériau de soutien, ledit réservoir étant relié fonctionnellement à une tuyère (12) d'application de matériau de soutien, un moyen (1) permettant d'indexer ladite tuyère d'application de matériau de soutien le long d'une voie prédéfinie, des moyens (37, 46, 110, 115) permettant de réguler l'écoulement dudit matériau de soutien dudit réservoir (49, 36, 115) à ladite tuyère (12) d'application de matériau de soutien et d'extruder ledit matériau hors de ladite tuyère d'application de matériau de soutien, **caractérisé en ce que** le réservoir de matériau de soutien comprend un matériau sableux.

12. Appareil selon la revendication 11, dans lequel le réservoir de matériau de soutien contient un sable siliceux et du silicate de sodium.

13. Appareil selon la revendication 11, comprenant en outre un récipient de liaison (36) de matériau de liaison couplé à une chambre de mélange (115), la chambre de mélange étant également couplée au réservoir (49) de matériau de soutien et comprenant des pales de mélange (41, 42) permettant de mélanger le sable et le liant avant l'extrusion à travers la tuyère (12) d'application de matériau de soutien.

14. Appareil selon la revendication 11, comprenant en outre des moyens (13, 29, 31, 35, 111) permettant d'appliquer un agent d'accélération dans ledit matériau cimentaire.

15. Appareil selon la revendication 11, comprenant en outre des moyens d'agitation (62, 65), lesdits moyens d'agitation étant en communication fonctionnelle avec ledit réservoir et/ou en connexion fonctionnelle entre ledit réservoir et ladite tuyère.

16. Appareil selon la revendication 11, comprenant en outre des moyens (44, 45) permettant d'appliquer un agent d'activation sur ledit matériau de soutien.

17. Appareil selon la revendication 16, dans lequel le moyen permettant d'appliquer un agent d'activation sur ledit matériau de soutien contient une source de substance gazeuse d'activation et un moyen (44) permettant d'acheminer ladite substance gazeuse d'activation jusqu'à ladite tuyère (12) d'application de matériau de soutien.

18. Appareil selon la revendication 17, dans lequel la source de substance gazeuse d'activation comprend une source de dioxyde de carbone.

19. Appareil selon la revendication 17, dans lequel la tuyère (12) d'application de matériau de soutien comprend un flasque (45) permettant d'appliquer la substance gazeuse d'activation au matériau de soutien extrudé à travers la tuyère d'application de matériau de soutien.

20. Appareil selon l'une quelconque des revendications 11 à 19, comprenant en outre un réservoir (30) de matériau cartilagineux, ledit réservoir étant relié fonctionnellement à une tuyère (35) d'application de matériau cartilagineux, un moyen d'indexation de ladite tuyère le long d'une voie prédéfinie, un moyen de régulation de l'écoulement dudit matériau cartilagineux dudit réservoir à ladite tuyère et l'extrusion dudit matériau hors de ladite tuyère.

21. Appareil selon l'une quelconque des revendications précédentes, comprenant en outre au moins une caméra (32), lesdites au moins une caméra étant soit statique, montée à un bras de robot ou indépendamment indexable pour suivre lesdites au moins une tuyère, lesdites caméras étant à même de capturer des informations relatives à la texture ou à la forme, ladite au moins une caméra étant à même de transférer lesdites informations vers une unité de commande informatique (110), ladite unité de commande informatique étant à même d'interpréter lesdites informations puis d'utiliser lesdites informations pour informer la commande de ladite au moins une tuyère et l'écoulement desdits au moins un matériau dudit au moins un réservoir auxdites au moins une tuyère.

22. Appareil selon l'une quelconque des revendications 11 à 21, dans lequel l'une quelconque des tuyères comprend une tuyère pouvant vibrer (121).

23. Appareil selon l'une quelconque des revendications 11 à 21, dans lequel l'une quelconque des tuyères comprend une tuyère à diamètre variable (130).
